Europäisches Patentamt

**European Patent Office**

**Office européen des brevets**

(11) Publication number: **0 009 407**
A1

## EUROPEAN PATENT APPLICATION

(21) Application number: 79301964.7

(22) Date of filing: 21.09.79

(51) Int. Cl.³: **C 03 B 33/02, B 26 D 5/02**

(30) Priority: 25.09.78 GB 3793078

(43) Date of publication of application: 02.04.80 Bulletin 80/7

(84) Designated Contracting States: BE CH DE FR IT

(71) Applicant: PLANTERS POWERGRIND LIMITED, 500 London Road, High Wycombe Buckinghamshire HP11 1LW (GB)

(72) Inventor: Hawkins, Maurice Henry, "Cartref" 154, Wycombe Road Prestwood, Great Missenden Buckinghamshire (GB)

(74) Representative: Wilson, T. Fletcher et al, 10 Grosvenor House Grosvenor Road, Coventry West Midlands, CV1 3FY (GB)

(54) **Cutting head positioning means in or for a glass cutting machine.**

(57) Cutting head positioning means in or for a glass cutting machine consists of a driven elongate flexible member such as an endless belt (22) which is carried by the bridge (2) of a glass cutting machine so that the belt (22) is disposed for driven longitudinal movement along the bridge (2) and across the machine bed (3), the or each cutting head (1) being mounted on the bridge for movement over the machine bed (3) and carrying means such as clamping means (4) operable for engagement with, or dis-engagement from, the belt (22) so that the cutting head (1) can be moved by and with the belt (22) and disengaged therefrom on the head (1) reaching a required position on the bridge (2). The clamping means (4) is shown arranged to grip one or the other of the runs of the belt (22) according to the required direction of movement of the head (1). The clamping means (4) or further means is arranged to grip a longitudinal member or rail (23) of the bridge to retain the head (1) in the required position.

The object of this invention is to provide improved means
for rapidly and accurately positioning one or more cutting
heads on the bridge of a sheet glass cutting machine whereby
required disposition of the head or heads can be readily
obtained according to the manner in which a sheet of glass
is to be cut on the bed or table of the machine.

The positioning means has particular practical application
where computerised programming of the cutting operation is
employed for maximum optimisation of the glass sheet and for
enabling electronic control of the positioning means to be
effected in an automatic manner throughout the cutting
operation.

The reference to the usual term glass cutting herein means
the scribing or scoring of the glass sheet prior to breaking
the latter apart into smaller sheets or panes.

According to this invention cutting head positioning means
in or for a glass cutting machine is characterised by a driven
elongate flexible member such as an endless belt which is
carried by the bridge of a glass cutting machine so that the
flexible member or belt is disposed across the machine bed,
the or each cutting head being mounted on the bridge for
movement over the machine bed and carrying means operable for
engagement with, or disengagement from, the flexible member or belt so that said cutting head can be moved by and with
the flexible member or belt on the latter being driven and
disengaged therefrom on the head reaching a required position
on the bridge.

In practice the construction and arrangement may be as follows,
reference being had to the accompanying drawings in which :-

FIGURE 1            is a side elevation of a
                    cutting head carried by a
                    cutting machine bridge and
                    shown in relation to the
                    positioning means,

FIGURE 2            is a view in the direction of
                    the arrow II of FIGURE 1, on
                    an enlarged scale,

FIGURE 3            is a part plan view of the
                    drive to the positioning means,
                    and

FIGURE 4            is a side elevation of a
                    cutting head showing an
                    alternative arrangement of the
                    invention.

Like parts are designated by the same or similar reference
numerals throughout the drawings.

0009407

In the practical application of the positioning means to a glass cutting machine and in a known manner, the bridge of the latter is arranged to span the bed of the machine widthwise, i.e. in the X direction, and is supported and driven at each side of the bed for travelling movement along the latter, i.e. in the Y direction. Thus the machine can have a single bridge which operates from end to end of a sheet of glass resting on the bed, but if desired, the bridge or more than one bridge may be otherwise arranged in relation to the bed.

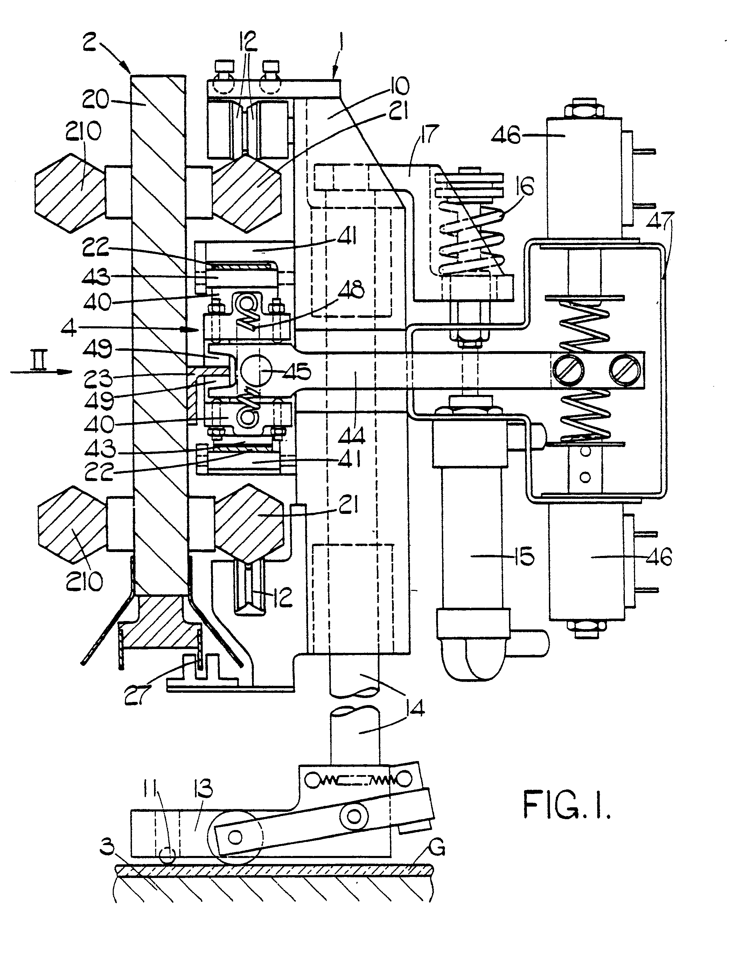

Referring in particular to FIGURE 1, one of the cutting heads 1 is shown mounted for movement along the bridge 2 and is provided with upper and lower rollers 12 engaging guide rods 21 shown of hexagonal cross section and carried by the main cross member 20 of the bridge 2. The lower part of the cutting head 1 is provided with a foot or holder 13 which carries a cutting tool or wheel 11 of suitable hard material for scribing or scoring glass sheet G on the bed 3 of the machine, the foot 13 being carried by a shaft 14 slidable vertically in the body 10 of the cutting head 1 which shaft 14 is operated by a ram 15 through a compression spring 16 and arm 17 to permit a suitable yielding action of the shaft 14 and foot 13.

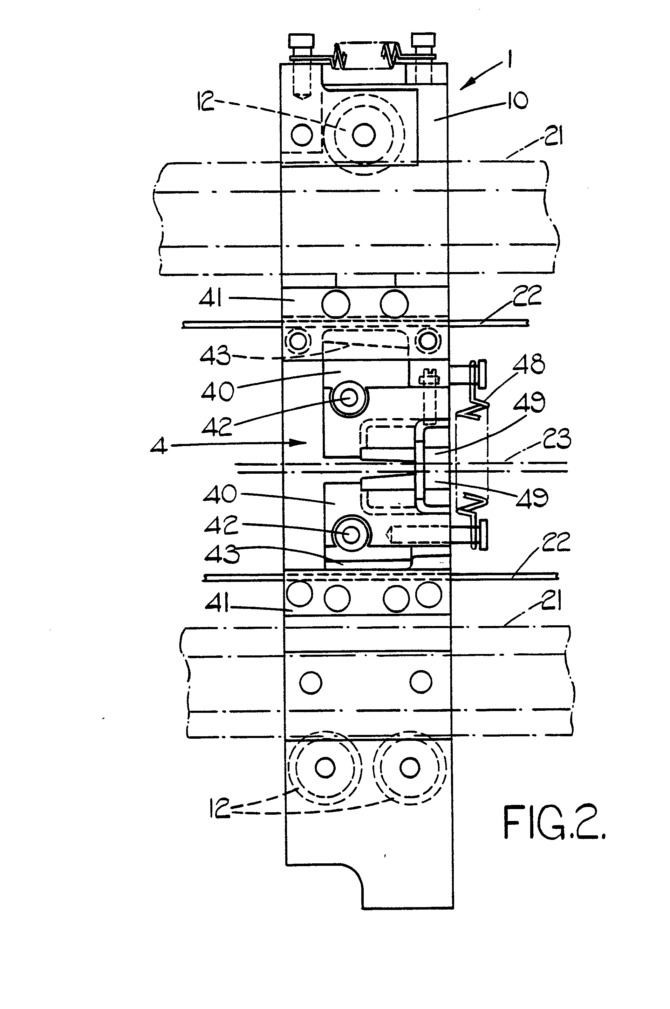

The bridge member 20 carries a driven endless flexible member shown in the form of a belt 22 and which is arranged to be engaged by upper or lower clamping means 4 carried by the body 10 of the cutting head 1. Each clamping means 4 comprises a pad 41 fixedly carried by the head body 10 and positioned adjacent an outer face of a corresponding run of the belt 22, whilst a co-operating clamping member 40 is pivotally carried at 42 by the body 10 for contact with the inner face of the associated belt run (see FIGURE 2). Means is provided for bringing a friction element or shoe 43 of one or the other of the clamping members 40 into contact with its respective belt run for gripping the latter between the shoe 43 and the pad 41 so that the cutting head 1 is thereby engaged with the belt run, according to the direction of required movement of the cutting head 1 along the bridge member 20.

In the example shown the clamping members 40 are actuated by a lever 44 pivoted at 45 on the body 10, which lever 44 is in turn operated by one or the other of a pair of solenoids 46 according to required clamping member operation, the solenoids 46 being shown carried by bracket structure 47 from the body 10 of the head 1 and which also carries the ram 15. Other means such as pneumatic or hydraulic rams may be used in place of the solenoids 46.

0009407

The clamping members 40 are also shown connected by a tension spring 48 to obtain their retraction from the runs of the belt 22 when the lever 44 is in the central or neutral position and also to obtain contact of further or inner friction elements or shoes 49 with a flange or rail 23 fast on the bridge member 20 so that, on release of the clamping members 40 from the belt runs, the shoes 49 immediately grip the rail 23 to firmly retain the cutting head 1 in the required position along the bridge member 20.

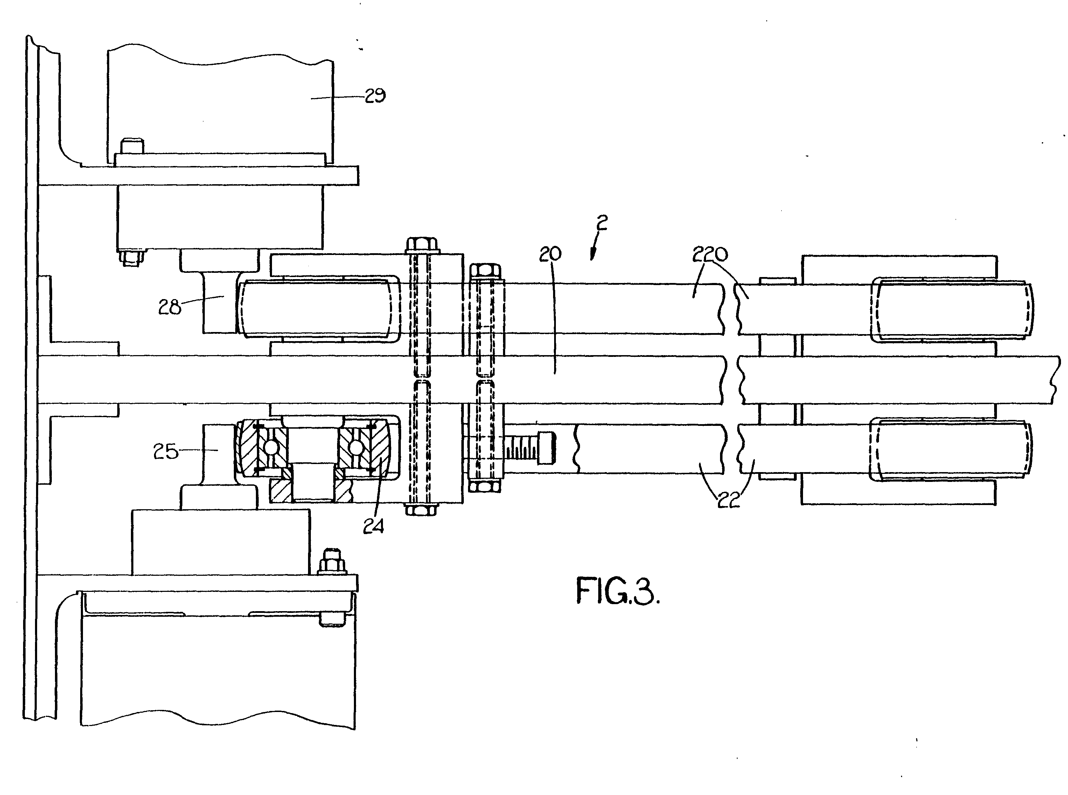

Referring to FIGURE 3 the belt 22 passes about a roller or pulley 24 at or adjacent each end of the bridge 2 and shown rotatably mounted from the bridge member 20. The belt 22 is directly frictionally driven by a capstan 25 which in turn is directly driven by a stepping motor 26 for controlled drive of the belt 22.

In a typical arrangement the bridge member 20 may carry eight cutting heads 1 which are initially grouped four adjacent one end of the bridge 2 and the other four adjacent the other end. By suitable control of the solenoids 46 of each head 1, the heads of one group are brought into engagement as required with the upper run of the belt 22 and the heads 1 of the other group with the lower run of the belt so that when the belt is driven, the heads of one group are moved towards the heads of the other in rapidly obtaining their distributed positioning along the bridge 2 in accordance with glass cutting requirements.

0009407

For maximum optimisation of a sheet of glass in obtaining a
number of smaller sheets or panes therefrom, the appropriate
cutting programme is determined by a computer from which a
tape or the like is prepared for operating electronic control
means such as a micro-processor for the required operation
of the stepping motor 26 driving the belt 22 and the cutting
head solenoids 46.

For initial or coarse setting of each head 1 the motor
drive to the belt 22 may be increased or ramped up and
then slowed down as the required position of the head 1
is approached.  Final accurate positioning of the head 1
by the control means is determined by the co-operation
of a photo-electric cell or similar device (not shown)
carried by the cutting head body 10 and co-operating with
a linear optical grating or comb 27 shown carried by the
lower part of the bridge member 20.

When brought and clamped in the required position of use,
the cutting wheels 11 of the cutting heads 1 perform
scribing of the glass G in a longitudinal or Y direction.
Transverse scribing of the glass in the X direction (or Z
direction when not fully across the glass) is effected by
usually a single cutting head (not shown) carried by guide
rods 210 on the opposite side of the bridge member 20,
which cutting head is secured or engaged in a permanent
manner with an appropriate run of a further endless belt
220 on that side of the bridge member 20 and parallel with

0009407

the belt 22. In a similar manner the belt 220 is driven by capstan drive 28 from a stepping motor 29, so that the belt 220 drives the head for transverse scribing operation.

After a transverse scribing has been effected, the cutting tools 11 of the cutting heads 1 are temporarily raised from contact with the glass G just before the transverse scribing so as to move clear over the latter before return to contact with the glass a short distance further on. In this way suitable clearance of a millimetre or so is provided between the longitudinal or Y scribing and the transverse or X scribing, so that suitable parting of the glass is obtained when the smaller sheets are broken away at the scribe lines. Here again operation of the heads 1 in this way is controlled by the electronic control means.

Whereas the belt 22 provides a simple and convenient means for effecting movement of the cutting heads 1, other preferably endless elongate flexible members may be employed such as chain, cable or cord, with suitable clamping or other means for dis-engageable engagement of the heads 1 therewith.

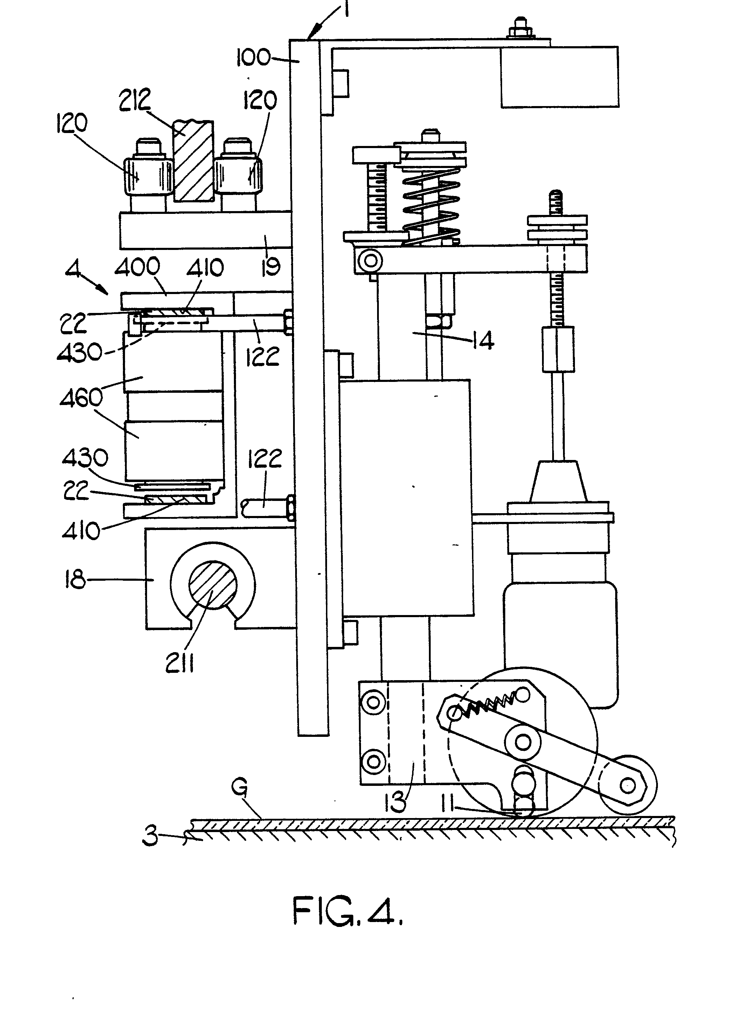

In an alternative arrangement shown in FIGURE 4 the head 1 is carried for movement along the bridge on or by guide rods 211, 212 of the latter and is shown supported on the lower guide rod 211 by a bearing block 18 secured to the body 100 of the head 1, the upper guide rod 212 being received between upstanding rollers 120 on a bracket 19 secured to the body 100.

The clamping means 4 comprises structure in the form of a
channel section member 400 fixed on the body 100 of the
head 1 and providing internal surfaces or pads 410, and a pair
of oppositely acting pneumatic rams 460 mounted within the
member 400. The runs of the belt 22 pass between corresponding
clamping members or shoes 430 of the rams 460 whereby on
appropriate operation of the latter one or the other of the
belt runs can be gripped between a respective co-operating
shoe 430 and pad 410 according to the required direction of
movement of the head 1 on the bridge.

A further similar ram (not shown) on the head body 100 is
provided for clamping onto a longitudinal member or rail
of the bridge in order to retain the head 1 in the required
position on the bridge after release from the belt 22.

The head body 100 is also shown carrying guide pins 122
(e.g. in the form of nylon sleeved screws) for supporting
corresponding runs of the belt 22 in relation to respective
pads 410 and clamping shoes 430.

0009407

CLAIMS

1. Cutting head positioning means in or for a glass
   cutting machine characterised by a driven elongate
   flexible member such as an endless belt (22) which
   is carried by the bridge (2) of a glass cutting
   machine so that the flexible member or belt (22) is
   disposed for driven longitudinal movement along the
   bridge (2) and across the machine bed (3), the or
   each cutting head (1) being mounted on the bridge (2)
   for movement along the latter over the machine bed (3)
   and carrying means (4) operable for engagement with,
   or disengagement from, the flexible member or belt
   (22) so that said cutting head (1) can be moved by
   and with the flexible member or belt (22) on the
   latter being driven and disengaged therefrom on the
   head (1) reaching a required position on the bridge (2).

2. Cutting head positioning means according to claim 1
   wherein the said means (4) carried by the or each
   head (1) is arranged to have a releasable clamping
   engagement with the flexible member or belt (22) in
   order to grip the latter for movement of the head (1)
   therewith.

3.  Cutting head positioning means according to claim 1 or 2 wherein the flexible member or belt (22) of endless form provides two substantially parallel runs which respectively move in opposite directions along the bridge (2) when the flexible member or belt (22) is driven, the said means (4) on the or each head (1) being adapted to engage one or the other of said runs according to the required direction of movement of the head (1) on the bridge (2).

4.  Cutting head positioning means according to claim 2 or claims 2 and 3 wherein the flexible member or belt (22) is received by said means (4) of the or each head (1) between structure (41,400,410) of said means (4) fixed to the head (1) and at least one clamping member (43,430) of said means (4) adapted to grip the flexible member or belt (22) against the fixed structure (41,400,410).

5.  Cutting head positioning means according to claims 3 and 4 wherein the said means (4) receives the two parallel runs of the endless flexible member or belt (22) between the structure (41,400,410) of said means (4) fixed to the head (1) and clamping members (43,430) of said means (4) operable in opposite directions for gripping one or the other of said runs against the fixed structure (41,400,410).

0009407

6.  Cutting head positioning means according to any of
    the preceding claims wherein said means (4) or
    further means on the or each head (1) is arranged
    to engage such as by releasable clamping engagement
    a longitudinal member or rail (23) which is fixed
    on the bridge (2) in order to retain the head (1)
    in the required position on the bridge (2) after
    disengagement from the flexible member or belt (22).

7.  Cutting head positioning means according to any of
    the preceding claims wherein the said means (4) for
    engaging or clamping onto the flexible member or belt
    (22) and alternatively on to any longitudinal member
    or rail (23) of the bridge (2) or any further means
    for the latter purpose is or are arranged for solenoid
    (46) or ram operation (460).

C009407

FIG.I.

0009407

FIG.2.

0009407

FIG.3.

220  22  20  29  28  25  24

FIG.4.

# EUROPEAN SEARCH REPORT

European Patent Office

| | DOCUMENTS CONSIDERED TO·BE RELEVANT | | | CLASSIFICATION OF THE APPLICATION (Int. Cl.²) |
|---|---|---|---|---|
| Category | Citation of document with indication, where appropriate, of relevant passages | Relevant to claim | | |
| | US - A - 3 470 776 (E. BRICHARD et al.)<br>* claims 1 and 3 *<br>--- | 1-5,<br>7 | | C 03 B 33/02<br>B 26 D 5/02 |
| | GB - A -1 377 060 (GLAVERBEL)<br>* page 5, lines 22 to 80; fig. 4 *<br>--- | 1,2,<br>4,7 | | |
| A | US - A - 3 216 635 (M. LEFEVRE)<br>--- | | | |
| A | FR - A - 2 105 067 (SAINT-GOBAIN-PONT-A-MOUSSON)<br>--- | | | TECHNICAL FIELDS SEARCHED (Int.Cl.³) |
| A | DE - U - 1 994 044 (K. PANNKOKE)<br>---- | | | B 26 D 5/00<br>C 03 B 33/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims |
|---|---|

| Place of search | Date of completion of the search | Examiner |
|---|---|---|
| Berlin | 30-11-1979 | HÖRNER |

EPO Form 1503.1  06.78